# EUROPÄISCHE PATENTSCHRIFT

(11) **EP 2 207 701 B1**
(45) Veröffentlichungstag und Bekanntmachung des Hinweises auf die Patenterteilung: **26.02.2014**
(21) Anmeldenummer: 08802953.3
(22) Anmeldetag: 01.08.2008
(51) Int. Cl.: B60R 13/08

(54) **SCHALLISOLIERUNG, INSBESONDERE FÜR DEN KRAFTFAHRZEUGINNENRAUM**
SOUND INSULATION, PARTICULARLY FOR MOTOR VEHICLE INTERIORS
ISOLATION SONORE, EN PARTICULIER POUR L'INTÉRIEUR D'UN VÉHICULE

(30) Priorität: 04.08.2007 DE 102007036952
(43) Veröffentlichungstag der Anmeldung: 21.07.2010
(73) Patentinhaber: HP Pelzer Holding GmbH, 58454 Witten (DE)
(72) Erfinder: SCHULZE, Volkmar, 84069 Schierling (DE); CZEP, Franz, 81673 München (DE)
(74) Vertreter: von Kreisler Selting Werner
(86) Internationale Anmeldenummer: PCT/EP2008/060157
(87) Internationale Veröffentlichungsnummer: WO 2009/019220

(56) Entgegenhaltungen:
- EP-A- 1 710 126
- DE-A1- 10 101 819
- DE-A1- 10 311 421

## Beschreibung

Die vorliegende Erfindung betrifft den Materialaufbau für Schallisolierungen, insbesondere für den Kraftfahrzeuginnenraum, speziell für Bodenverkleidungen und Stirnwände.

Die im Automobilbereich eingesetzten Bodenverkleidungen erfüllen verschiedene Funktionen, denen man bei der Herstellung gerecht werden muss: ästhetische Ansprüche (Oberflächenoptik, angenehme Haptik), Nivellierung von Oberflächenkonturen der Karosserie, akustische Funktionen (Dämpfung, Absorption und Isolation), beste Nutzungseigenschaften (geringster Verschleiß, hohe Durchtrittsfestigkeit, gute Reinigungseignung, hohe Lichtbeständigkeit), Einschäumen zusätzlicher Bauteile (Befestigung von Fußmatten, Teile zur Erhöhung der Trittfestigkeit, Crasheinleger), Aussparungen für Fondraumheizung sowie für Kabelkanäle, Aufschweißen von Trittschutz und Befestigung der Fußstütze. Dabei ist ebenfalls die Prozesseignung sicherzustellen: extreme Tiefziehfähigkeit ohne Funktionseinbußen, Durchschäumsicherheit des Materialaufbaus, Recyclingfähigkeit. In letzter Zeit hat das Emissionsverhalten hierbei enorm an Bedeutung gewonnen. Der somit heute übliche Materialaufbau einer Bodenverkleidung im Automobilbereich ist der folgende: Flor/Tuftingträger/Einbindung/Kaschierkleber/Schwerfolie/Abdeckvlies/ Weichschaum.

Bei Mittelklasse- und Luxusklassefahrzeugen setzt man Tufting-Velours-Qualitäten ein, bei Kompaktklassefahrzeugen Flachnadelvliese und Dilours-Qualitäten. Auch findet man hier beflockte, gestrickte, gewirkte und gewebte Materialien sowie Malivliese. Als Beschichtung werden Latex, thermoplastische Dispersionen und Polyolefine (insbesondere PE) sowie thermoformbare Vlieskonstruktionen eingesetzt. Anstatt eines PUR-Weichschaumes (mit Raumgewichten ≥ 40 kg/m³) setzt man auch locker verpresste duroplastisch oder thermoplastisch gebundene Textilfaservliese sowie Kombinationen von Schaumstoff- oder Vliesschichten mit verschiedenen Strömungswiderständen ein. Bei Vliesisolationen arbeitet man von Platine oder mittels dem Flock-Verfahren.

Das Schallschluckvermögen der Bodenverkleidung kann erhöht werden, wenn eine poröse, luft- und somit schalloffene Schicht zwischen der eigentlichen Oberware und der prozessbedingten Dichtschicht beziehungsweise der Schwerfolie eingefügt wird. Als poröse, luft- und somit schalloffene Schicht (Absorptionsschicht) finden hier Polyester- und Mischfaservliese Anwendung. Zur Verhinderung beziehungsweise Minimierung des Wassereintritts in den Materialaufbau der Bodenverkleidung ist diese hydrophob ausgestattet. Die oftmals zusätzlich zur Schwerfolie eingesetzte Dichtfolie soll den Schaumdurchschlag beim Hinterschäumen verhindern. Bei Anwendung von Schwerfolie oder Dichtfolie bzw. Folienvlies ist die Bodenverkleidung akustisch nicht offen, weshalb eine absorptive Wirkung in solchen Fällen nur gering ist.

Im Zuge der Gewichtseinsparung verzichtet man - entsprechend der Motorisierung und der Karosseriegestaltung - heute teilweise auch ganz auf die Schwerfolie (Flächengewichte liegen hier zwischen 0,8 und 12 kg/m²) und setzt nur Dichtfolien bzw. Follenvliese (Mehrschichtfolien mit Flächengewichten zwischen 0,04 und 0,35 kg/m²) ein. Auch verhindern diese, ebenso wie die Schwerfolle, das Eintreten von Wasser in die Bodenverkleidungsisolation.

Bei den heute in der Automobilindustrie eingesetzten Stirnwänden im Inneren des Fahrgastraumes kommen folgende Materialkombinationen zum Einsatz:
a.) Schaumstoff-Schwerfolie
b.) Schaumstoff-thermoplastischer Kunststoff
c.) Schaumstoff-hochgefüllte PUR-Kompaktmasse (RIM)
d.) Vlies (einlagig)
e.) mehrschichtiges Vlies (vgf. DE 103 24 257 B3)
f.) Schaumstoff-Schwerfolie-Vlies bzw. Schaumstoff-allg. eine Masseschicht-Vlies

Die Nachteile der Varianten a.), b.), c.) und f.) sind vorwiegend das hohe Gewicht und die hohen Kosten. Wenn die Varianten d.) und e.) mit Schaumstoff hinterschäumt werden, bildet der Schaumstoff durch das Eindringen in das Vlies (das Nadelvlies bzw. das geflockte Vlies (HMP-Verfahren)) eine geschlossene Schicht, wodurch das Vlies einen Grossteil seiner Porosität verliert. Damit ist die akustische Durchlässigkeit und somit die gewünschte Absorption beziehungsweise Isolation des Stirnwandaufbaus erheblich eingeschränkt. Gleichfalls treten dadurch weitere akustische Verluste auf, dass der Teil des Vlieses, der mit Schaumstoff getränkt ist, nicht mehr voll zur Absorption beitragen kann. Bei e.) wird dann der sogenannte dual impedance-Effekt beeinträchtigt bzw. zerstört. Weitere Nachteile der Varianten d.) und e.) sind: es sind keine Inserts einvlies-/einflockbar, es ist keine form- und/oder kraftschlüssige Anlage zur Karosserie (dem Stirnwandblech, der A-Säule) realisierbar, die Vliesdicke ändert sich nach der Formgebung (das Vlies weitet sich geringfügig/es geht geringfügig auf). Insbesondere die Konturgängigkeit ist bei Vlies-Varianten sowie PUR-Leichtschaum- und Melaminharzschaum-Varianten (hergestellt im Form-Press- oder Form-Press-Pinch-Verfahren) nicht so präzise wie bei einem formgeschäumten Schaumstoff. Auch die "Rippen-Ausbildung" zur Karosserie hin ist hinsichtlich der Formschlüssigkeit präzise nur mit formgeschäumten Schaumstoff umsetzbar.

EP 0 303 948 A2 beschreibt eine typische Fahrgastrauminnenauskleidung bestehend aus einer fahrgastseitigen Sichtfläche, auf der eine Schicht von geschäumtem Latex, eine schaumdichte Sperrschicht und gegebenenfalls eine geschäumte Rückenbeschichtung aufgebracht sind.

DE 39 05 607 C2 beschreibt eine Bodenverkleidung für Kraftfahrzeuge bestehend aus einer Sichtfläche, einer Schicht eines schallabsorbierenden, d.h. akustisch wirksamen, Materials und einer hinterschäumten Schicht. Die akustisch wirksame Schicht wird hierbei durch ein Abdichtvlies, eine Schwerschicht oder eine aufgebrachte Wachsdispersion vor einem Schaumdurchschlag bei der Hinterschäumung geschützt.

DE 100 44 761 A1 beschreibt einen Bodenbelag, bei welchem eine geräuschmindernde Wirkung dadurch erzielt wird, dass die Sichtfläche akustisch zu einer aus Faservlies und/oder geschäumten Kunststoff bestehenden Bodenbelags-Unterschicht über wenigstens eine mikrogelochte Folie gekoppelt ist.

WO 2004/071758 A1 beschreibt einen Bodenbelag für Kraftfahrzeuge, bei welchem die Sichtfläche auf eine erste Rückenschicht aufgenäht ist. Diese erste Rückenschicht besteht aus einer gesponnenen Schicht und einer akustisch wirksamen Schicht eines geflochtenen Materials, welche wiederum durch ein thermoverformbares Netz miteinander verbunden sind. Der ersten Rückenschicht kann eine zweite Rückenschicht aufgelegt sein, bei welcher es sich beispielsweise um ein geschäumtes Kunststoffmaterial handeln kann.

DE 10 2004 046 201 A1 beschreibt ein hinterschäumtes Teppichformteil für Kraftfahrzeuge. Beim Prozess des Hinterschäumens wird ein Nadelvlies, das aus Chemiefasern mit einer Feinheit von kleiner als 6,7 dtex und Bikomponenten-(BiCo)-Schmeiklebefasern hergestellt ist und ein Flächengewicht im Bereich von 600 bis 900 g/m² aufweist, anstelle einer Abdicht- oder Schwerschichtfolie als Sperrschicht gegen Schaumdurchschlag eingesetzt. Nachteilig an dem beschriebenen Materialaufbau ist die Tatsache, dass der Schaumstoff beim Eindringen in die (Schaum-) Sperrschicht eine geschlossene Schicht bildet, womit das Nadelvlies einen Grossteil seiner Porosität verliert. Dies hat zur Folge, dass die akustische Durchlässigkeit und somit die gewünschte Absorption des Gesamt-Bodenverkleidungs-Aufbaus erheblich eingeschränkt ist. Gleichfalls treten dadurch weitere akustische Verluste auf, dass der Teil des Nadelvlieses, der nun mit Schaumstoff getränkt ist, nicht mehr zur Absorption in entsprechendem Maße beitragen kann.

EP 1 710 126 A1 betrifft Schallisolierungen aus einer Schaumstoffschicht und einer Sperrschicht, wobei sich zwischen der Schaumstoffschicht und der Sperrschicht eine mikroperforierte Schicht befindet.

Die Nachteile bisheriger Boden- und Stirnwandverkleidungen bestehen nun darin, dass eine Schallabsorption allein auf die Oberfläche oder eine dünne Unterschicht beschränkt bleibt, wodurch eine Schallabsorption nur bedingt erfolgen kann. Je nach Ausführungsform besteht bei der Verwendung einer Schwerfolie als Masse in einem Feder-Masse-System noch zusätzlich der Nachteil des erhöhten Gewichtes des gesamten Verkleidungsaufbaus.

Die vorliegende Erfindung stellt sich daher die Aufgabe, einen akustisch offenen Materialaufbau bereitzustellen, weicher aufgrund seiner hohen absorptiven Wirkung vorteilhaft als Boden- oder Stirnwandverkleidungsaufbau in Kraftfahrzeuginnenräumen verwendet werden kann und welcher gegenüber dem heutigen Stand der Technik gleichzeitig eine deutliche Gewichtsreduktion ermöglicht.

**Die vorgenannte Aufgabe wird gelöst durch Schallisolierungen gemäß Anspruch 1. Weitere Ausgestaltungen der Erfindung sind den davon abhängigen Ansprüchen zu entnehmen.**

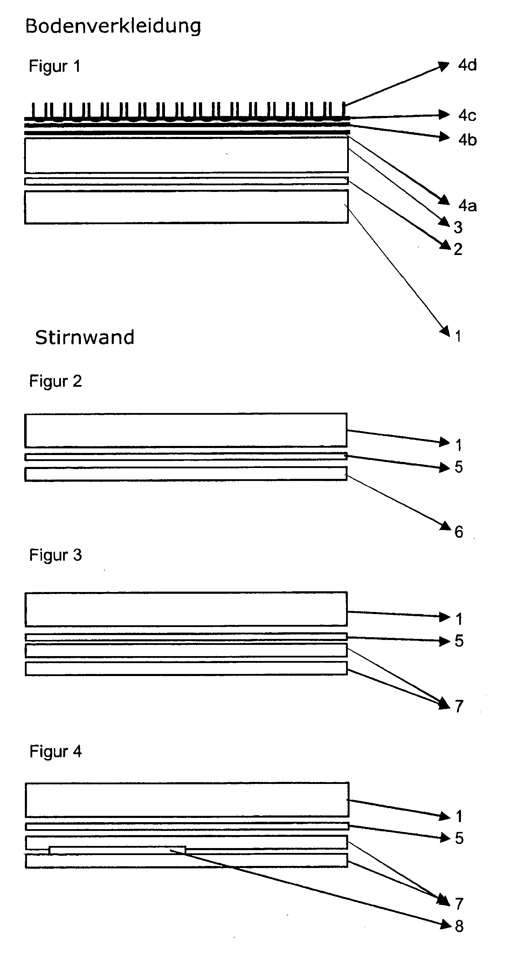

Die Fig. 1 bis 4 stellen spezielle Ausführungsformen der vorliegenden Erfindung dar, wobei die Erfindung jedoch nicht auf diese Beispiele begrenzt ist.
Fig. 1 zeigt eine typische Anwendung der erfindungsgemäßen Schallisolierung als Bodenverkleidung in Kraftfahrzeugen. Zwischen der Schaumstoffschicht 1 und der Sperrschicht (dem Absorptionsvlies) 3 befindet sich vorgelagert eine gegebenenfalls mikroperforierte Vliesschicht oder eine mikroperforierte Folie oder ein mikroperforiertes Folienvlies 2. Im Folgenden werden die Begriffe der vorgelagerten mikroperforierten Vliesschicht, der vorgelagerten mikroperforierten Folie und des vorgelagerten mikroperforierten Folienvlieses allgemein unter dem Ausdruck "vorgelagerte Schicht" zusammengefasst. Die vorgelagerte Schicht kann sowohl voll- als auch teilflächig mikroperforiert sein. Die Schaumstoffschicht 1 liegt dabei an der Fahrzeuginnenseite, der Karosserie, an. Auf der Sichtseite der Schallisolierung, d.h. also auf der Sperrschicht 3 können sich der Teppich mit dem Schichtaufbau 4a-d bzw. weitere oder andere Schichten, deren Aufgabe zum Beispiel eine Verbesserung der Funktionalität oder der Ästhetik sein kann, befinden.
Fig. 2 zeigt einen erfindungsgemäßen Aufbau, der sich zum Beispiel zur Verwendung als Stirnwand in Kraftfahrzeugen eignet. Er besteht aus der der Karosserie zugewandten Schaumstoffschicht 1, der vorgelagerten Schicht 5 und der Sperrschicht 6.
Fig. 3 zeigt als Alternative zum in der Fig. 2 dargestellten Aufbau eine zweilagige Sperrschicht 7.
Fig. 4 stellt eine weitere Ausführungsform dar, in weicher zwischen den Schichten der zweilagigen Sperrschicht 7 eine Massebelegung 8 eingefügt ist.

Unter der Sperrschicht 3, 6, 7 ist In diesem Zusammenhang ebenfalls eine Vliesschicht zu verstehen, welche aber von der der Schaumstoffschicht 1 vorgelagerten (Vlies)Schicht 2, 5 verschieden ist und welche für durch Hinterschäumen aufzubringenden Schaumstoff nicht vollkommen undurchlässig ist.

Die Lochdurchmesser der mikroperforierten vorgelagerten Schicht 2, 5 betragen 0,2 bis 0,5, bevorzugt 0,3 bis 0,4 mm, der Lochabstand 3 bis 7 mm, bevorzugt 3,5 bis 5,5 mm. Die Löcher können nach an sich im Stand der Technik bekannten Verfahren, beispielsweise durch Stanzen, mittels Loch- oder Nadelwalzen und Nadelbalken oder Laserbestrahlung mit beliebiger Geometrie in die vorgelagerte Schicht2, 5 eingebracht werden.

Überraschend wurde nämlich gefunden, dass durch die Kombination zweier verschiedener Schichten, das heißt der Sperrschicht 3, 6, 7 und der ihr vorgelagerten gegebenenfalls mikroperforierten Schicht 2, 5, beim Hinterschäumen eine Aufteilung des Schaumstoffes auf die vorgelagerte Schicht 2, 5 und eines Teils der Sperrschicht 3, 6, 7 dergestalt erzielt wird, dass die Auslaufschicht des Schaumstoffes weit weniger geschlossen ist, als im Falle des Hinterschäumens der Sperrschicht 3, 6, 7 alleine. Die geringere Geschlossenheit der Auslaufschicht bedingt dabei gleichzeitig eine größere akustische Durchlässigkeit, die Schallabsorption eines solchen Materialaufbaus ist mithin wesentlich größer.

Durch die abgestimmte Wahl der Sperrschicht 3, 6, 7 und der vorgelagerten Schicht 2, 5 können weitgehend definierte akustische Wirkungen eingestellt werden. Darüber hinaus kann auch die Trittfestigkeit und/oder die Biegesteifigkeit unter Beachtung der absorptiven Wirkung gezielt beeinflusst werden, wodurch sich die Anwendung eines solchen Materialaufbaus zum Beispiel als Boden- oder Stirnwandverkleidung in Kraftfahrzeugen anbietet. Dabei hat sich gezeigt, dass die Steifigkeit wesentlich durch die "Verkrallung" des Schaumstoffes insbesondere in der vorgelagerten Schicht 2, 5 beeinflusst wird.

Ist der Sperrschicht 3, 6, 7 eine mikroperforierte Folie 2, 5 vorgelagert, dann ist diese bevorzugt im Dickenbereich von 40 bis 100 µm; ist es ein mikroperforiertes Folienvlies 2, 5, dann ist dieses bevorzugt im Dickenbereich von 65 bis 180 µm.

Die sich auf der vorgelagerten Schicht 2, 5 befindende Schaumstoffschicht 1 kann aus synthetischen, insbesondere Polyurethanen (PUR), oder natürlichen Polymeren, insbesondere Latex, bestehen. Handelt es sich bei der Schaumstoffschicht 1 um ein PUR, so weist diese zweckmäßigerweise ein Raumgewicht im Bereich von 30 bis 120 g/l, insbesondere im Bereich von 45 bis 85 g/l, auf. Höhere Raumgewichte bringen zwar eine Zunahme der Dämmung aber auch eine unerwünschte Massenzunahme des erfindungsgemäßen Materialaufbaus mit sich. Bei zu kleinen Raumgewichten weist der resultierende Materialaufbau nicht mehr eine ausreichende Stabilität (wie beispielsweise Druck-, Tritt- oder Biegefestigkeit) auf.

Die gegebenenfalls mikroperforierte Vliesschicht bzw. das mikroperforierte Folienvlies 2, 5 des erfindungsgemäßen Materialaufbaus kann verschiedene synthetische oder natürliche Fasern, auch In Form eines Gemisches dieser, enthalten. So sind zum Beispiel Polyesterfasern, insbesondere PET, Polyamidfasern, insbesondere Nylon 6 oder Nylon 66, Polyolefinfasern, insbesondere PP oder PE, Acrylfasern, Naturfasern, insbesondere Rohbaumwoll-, Hanf-, Flachs, Cocos-, Kenaf-, Jute- und/oder Sisalfasern, oder Gemische dieser, insbesondere Reißbaumwollfasern mit Synthetikanteil oder PET/PA-Vliese, oder Copolymere dieser einsetzbar.

Dieser derart beschriebene, durch eine vorgelagerte Schicht 2, 5 gekennzeichnete Materialaufbau, kann In Abhängigkeit von im Wesentlichen der Flächengewichte bzw. Schichtdicke der vorgelagerten Schicht 2, 5 bzw. der Sperrschicht 3, 6, 7 in unterschiedlichen Gebieten eingesetzt werden. So kann dieser zum Beispiel als Bodenverkleidung (vergleiche Fig. 1) oder als Stirnwand (vergleiche Fig. 2 bis 4) in Kraftfahrzeugen verwendet werden.

Die Bodenverkleidung ist dadurch gekennzeichnet, dass die Sperrschicht (das Absorptionsvlies) 3 ein Vlies mit einem Flächengewicht im Bereich von 180 bis 650 g/m², insbesondere im Bereich von 220 bis 550 g/m², ist. Höhere Flächengewichte führen dabei zu einer unerwünscht hohen Massenzunahme des Materialaufbaus, geringere zu einer Verminderung seiner Stabilität.

Die Sperrschicht 3 kann bei Bodenverkleidungen verschiedene synthetische oder natürliche Fasern, auch in Form eines Gemisches dieser, enthalten. So sind zum Beispiel Polyesterfasern, insbesondere PET, Polyamidfasern, insbesondere Nylon 6 oder Nylon 66, Polyolefinfasern, insbesondere PP oder PE, Acrylfasern, Naturfasern, insbesondere Rohbaumwoll-, Hanf-, Flachs, Cocos-, Kenaf-, Jute- und/oder Sisalfasern, oder Gemische dieser, insbesondere Reißbaumwollfasern mit Synthetikantell oder PET/PA-Vliese, oder Copolymere dieser einsetzbar.

Auch kann die Sperrschicht 3 bei Bodenverkleidungen sogenannte Bikomponenten-Fasern (BiCo-Fasern) mit einem Massen- Anteil von 10 bis 50%, insbesondere von 20 bis 40%, enthalten.

BiCo-Fasern sind dabei Fasern oder Seiden, die aus mindestens zwei miteinander fest verbundenen, aber voneinander abgegrenzten, durch eine Spinndüsenöffnung gemeinsam ausgesponnenen (extrudierten) Spinnmassen bestehen. Diese Spinnmassen können unterschiedliche physikalische und/oder chemische Eigenschaften haben.

Die der Sperrschicht 3 bei Bodenverkleidungen vorgelagerte Vliesschicht 2 weist insbesondere ein Flächengewicht im Bereich von 40 bis 300 g/m², insbesondere im Bereich von 80 bis 250 g/m², auf. Diese engen Grenzen bezüglich des Flächengewichtes der vorgelagerten Vliesschicht 2 sind bevorzugt, um die erfindungsgemäße akustisch offenere Auslaufform des in die Vliesschichten eindringenden Schaumstoffs zu erreichen. In der Mehrzahl der Kombinationen ist das Material der vorgelagerten Vliesschicht 2 weniger dicht, weist also ein geringeres Raumgewicht auf, als das der daraufliegenden Sperrschicht 3. Die vorgelagerte Vliesschicht 2 ist für den Schaumstoff leichter durchgängig und die Schaumstoffschicht läuft dann innerhalb der Sperrschicht 3 aus. Die Bremswirkung des Schaumstoffes wird im vorgelagerten, gegebenenfalls mikroperforierten Vlies 2 und in der Sperrschicht 3 aufgeteilt. Die durch die Teilung entstandene Auslaufschicht des Schaumstoffes ist damit weniger geschlossen und in der akustischen Durchlässigkeit offener. Diese Regel ist aber nicht allgemeingültig, da sich die Verhältnisse, in Abhängigkeit der Schichtdicken und/oder hydrophober/hydrophiler Wechselwirkungen zwischen den Schichten und dem Schaumstoff, auch durchaus umkehren können.

Auf der von der Schaumstoffschicht 1 abgewandten Seite der Sperrschicht 3, das heißt also auf der dem Fahrgastinnenraum zugewandten Sichtseite, kann sich darüber hinaus auch mindestens eine weitere textile oder nichttextlie perforierte Schicht 4 aus Kunststoff, Gummi, Metall, Leder, Kunstleder, Holz, Kork oder Pappe befinden.

Bei Stirnwänden im Sinne der vorliegenden Erfindung sind wenigstens zwei Ausführungsformen denkbar, bei welcher die Sperrschicht 6, 7 eine ein- oder eine zweilagige Vliesschicht darstellt. Als einlagige Vliesschicht weist die Sperrschicht 6 dabei insbesondere ein Flächengewicht im Bereich von 300 bis 1800 g/m², insbesondere von 500 bis 1400 g/m², auf. Als zweilagige Vliesschicht 7 weist diese insbesondere ein Gesamtflächengewicht im Bereich von 500 bis 2500 g/m², insbesondere von 650 bis 2000 g/m², auf. Höhere Flächengewichte führen dabei zu einer unerwünscht hohen Massenzunahme des Materialaufbaus, geringere zu einer Verminderung seiner Stabilität.

Die der Sperrschicht vorgelagerte Vliesschicht 5 weist bei Stirnwänden insbesondere ein Flächengewicht im Bereich von 20 bis 300 g/m², insbesondere von 60 bis 250 g/m², auf. Diese engen Grenzen bezüglich des Flächengewichtes der vorgelagerten Vliesschicht 5 sind bevorzugt, um die erfindungsgemäße akustisch offenere Auslaufform des in die Vliesschichten eindringenden Schaumstoffs zu erreichen. In der Mehrzahl der Kombinationen ist das Material der vorgelagerten Vliesschicht 5 weniger dicht, weist also ein geringeres Raumgewicht auf, als das der darauf aufliegenden Sperrschicht 6, 7. Die vorgelagerte Vliesschicht 5 ist für den Schaumstoff leichter durchgängig und die Schaumstoffschicht läuft dann Innerhalb der Sperrschicht 6, 7 aus. Die Bremswirkung des Schaumstoffes wird im vorgelagerten gegebenenfalls mikroperforierten Vlies 5 und in der Sperrschicht 6, 7 aufgeteilt. Die durch die Teilung entstandene Auslaufschicht des Schaumstoffes ist damit weniger geschlossen und in der akustischen Durchlässigkeit offener. Diese Regel ist aber nicht allgemeingültig, da sich die Verhältnisse, in Abhängigkeit der Schichtdicken und/oder hydrophober/hydrophiler Wechselwirkungen zwischen den Schichten und dem Schaumstoff, auch durchaus umkehren können.

Entsprechend der Motorisierung kann
zwischen der Schaumstoffschicht 1 und der sich darauf befindenden vorgelagerten Schicht 2, 5
und/oder
zwischen der vorgelagerten Schicht 2, 5 und der Sperrschicht 3, 6, 7 und/oder
zwischen der Sperrschicht 3, 6, 7 und der darauf aufliegend(en) Schicht(en) 4 und/oder
zwischen den die Sperrschicht 7 bildenden Vliesschichten
und/oder
zwischen den auf der Sperrschicht 3, 6, 7 liegenden Schichten 4
eine vollflächige oder partielle Massebelegung 8 aufgebracht sein.

Entsprechend der Motorisierung kann bei Bodenverkleidungen zwischen der Sperrschicht (dem Absorptionsvlies) 3 und der vorgelagerten Vliesschicht, oder der mikroperforierten Folie bzw. dem mikroperforierten Folienvlies 2 partiell, in Ausnahmefällen vollflächig, und (schaumseitig) auf die vorgelagerte Vliesschicht, oder die mikroperforierte Folie bzw. dem mikroperforierten Folienvlies 2 partiell oder vollflächig eine Massebelegung aufgebracht werden.

Bei Stirnwänden kann entsprechend der Motorisierung eine bedarfsorientierte, vorwiegend partielle Massebelegung 8 zwischen Schaumstoffschicht 1 und vorgelagerter Vliesschicht, oder der mikroperforierten Folie bzw. dem mikroperforierten Folienvlies 5; eine bedarfsorientierte partielle oder vollflächige Massebelegung 8 zwischen der (zweilagigen) Vliesschicht 7 und auf der dem Fahrzeuginnenraum zugewandten Seite der Vliesschicht 6,7 sowie zwischen der vorgelagerten Vliesschicht, oder der mikroperforierten Folie bzw. dem mikroperforierten Folienvlies 5 und der Sperrschicht 6; und eine partielle Massebelegung zwischen der vorgelagerten Vliesschicht, oder der mikroperforierten Folie bzw. dem mikroperforierten Folienvlies 5 und der (zweilagigen) Vliesschicht 7 ein-/aufgebracht sein.

In einer zweiten Ausführungsform wird die der Erfindung zugrundeliegende Aufgabe gelöst durch ein Verfahren, mit welchem man oben beschriebene Schallisolierung herstellen kann, das dadurch gekennzeichnet ist, dass man die Schaumstoffschicht 1 durch Hinterschäumen der Sperrschicht 3, 6, 7 und der vorgelagerten Schicht 2, 5 in einem Schäumwerkzeug aufbringt, wobei der Schaumstoff zuerst auf die vorgelagerte Schicht 2, 5 aufgebracht wird. Dabei durchdringt der Schaumstoff nicht nur die vorgelagerte Schicht 2, 5 sondern ebenfalls auch einen Teil der Sperrschicht 3, 6, 7, woraus schließlich die erfindungsgemäße akustisch offenere Auslaufform des Schaumstoffes innerhalb dieser beiden Vliesschichten resultiert.

Ein besonderer Vorteil dieses Verfahrens besteht darin, dass in die Schaumstoffschicht 1 sowie die vorgelagerte Schicht 2, 5 Inserts einschäumbar / fixierbar sind. Durch die Aufbringung in einem Formwerkzeug ist ebenfalls eine form- und/oder kraftschlüssige Anlage der formgeschäumten Schaumstoffschicht 1 zur Karosserie, das heißt eine präzise Konturgängigkeit, gewährleistet. Eine optimale Dichtigkeit zwischen Karosserie und Bodenverkleidung bzw. Stirnwand (bezüglich der Schallisolierung) ist also gegeben, was wiederum das Auftreten von Schallnebenwegen weitgehend ausschließt.

Die der Schaumstoffschicht 1 abgewandte Seite der Sperrschicht 3, 6, 7 kann vor oder nach dem Hinterschäumen mittels Latex, thermoplastischer Dispersionen oder Polyolefinen, insbesondere PE, oder thermoformbarer Klebevlieskonstruktionen mit mindestens einer zusätzlichen Schicht 4 verbunden werden.

Die sich zwischen der Schaumstoffschicht 1 und der Sperrschicht 3, 6, 7 befindende Vliesschicht 2, 5 kann vor dem Hinterschäumen mittels BiCo- oder PP-Faser-Anteilen in den Vliesen, thermoplastischer Dispersionen oder Polyolefinen, insbesondere PE, oder Vernadeln mit der Sperrschicht 3, 6, 7 verbunden werden.

In einer dritten Ausführungsform wird die der Erfindung zugrundeliegende Aufgabe gelöst durch die Verwendung des erfindungsgemäßen Materialaufbaus zur Schall- und/oder Wärmedämmung. Typische Beispiele hierfür sind Bodenverkleidungen oder Stirnwände im Kraftfahrzeugbereich.

### Bezugszeichenliste:

- **1**: **formgeschäumter Schaumstoff**
- **2**: **(vorgelagertes) ggfs. mikroperforiertes Vlies/mikroperforierte Folie oder mikroperforiertes Folienvlies**
- **3**: **Sperrschicht (Absorptionsvlies)**
- **4a**: **Beschichtung**
- **4b**: **Einbindung**
- **4c**: **Teppichträger**
- **4d**: **Flor**
- **5**: **(vorgelagertes) ggfs. mikroperforiertes Vlies/mikroperforierte Folie oder mikroperforiertes Folienvlies**
- **6**: **Sperrschicht (Vliesschicht)**
- **7**: **Sperrschicht (zweilagige Vliesschicht)**
- **8**: **partielle Massebelegung**

## Patentansprüche

1. Schallisolierungen aus einer Schaumstoffschicht (1), einer voll- oder teilflächig vorgelagerten Schicht (2,5) und einer Vliessperrschicht (3, 6, 7), **dadurch gekennzeichnet, dass** die vorgelagerte Schicht (2,5) eine Vliesschicht **die gegebenenfalls mikroperforiert ist**, eine mikroperforierte Folie oder ein mikroperforiertes Folienvlies (2,5) mit einer Dicke von 65 bis 180 µm umfasst, **wobei sich die Schicht (2,5)** zwischen der Schaumstoffschicht (1) und der Vliessperrschicht (3,6,7) mit einem Flächengewicht von 180 bis 650 g/m² befindet.

2. Schallisolierungen gemäß Anspruch 1, **dadurch gekennzeichnet, dass** das mikroperforierte Folienvlies (2, 5) eine Dicke im Bereich von 40 bis 100 µm aufweist.

3. Schallisolierungen gemäß einem der Ansprüche 1 oder 2, **dadurch gekennzeichnet, dass** die Schaumstoffschicht (1) eine PUR-Schaumstoffschicht mit einem Raumgewicht im Bereich von 30 bis 120 g/l, insbesondere mit einem Raumgewicht im Bereich von 45 bis 85 g/l, oder eine Latex-Schaumstoffschicht ist.

4. Schallisolierungen gemäß einem der Ansprüche 1 bis 3, **dadurch gekennzeichnet, dass** die gegebenenfalls mikroperforierte Vliesschicht bzw. das mikroperforierte Folienvlies (2, 5) Polyesterfasern, insbesondere PET, Polyamidfasern, insbesondere Nylon 6 oder Nylon 66, Polyolefinfasern, insbesondere PP oder PE, Acrylfasern, Naturfasern, insbesondere Rohbaumwoll-, Hanf-, Flachs, Cocos-, Kenaf-, Jute- und/oder Sisalfasern, oder Gemische dieser, insbesondere Reißbaumwollfasern mit Synthetikanteil oder PET/PA-Vliese, oder Copolymere dieser umfasst.

5. Schallisolierungen für Bodenverkleidungen in Kraftfahrzeugen gemäß einem der Ansprüche 1 bis 4, **dadurch gekennzeichnet, dass** die Sperrschicht (3) eine Vliesschicht mit einem Flächengewicht im Bereich von 220 bis 550 g/m² ist.

6. Schallisolierungen gemäß Anspruch 5, **dadurch gekennzeichnet, dass** die Sperrschicht (3) Polyesterfasern, insbesondere PET, Polyamidfasern, insbesondere Nylon 6 oder Nylon 66, Polyolefinfasern, insbesondere PP oder PE, Acrylfasern, Naturfasern, insbesondere Rohbaumwoll-, Hanf-, Flachs, Cocos-, Kenaf-, Jute- und/oder Sisalfasern, oder Gemische dieser, insbesondere Reißbaumwollfasern mit Synthetikanteil oder PET/PA-Vliese, oder Copolymere dieser, insbesondere BiCo-Fasern mit einem Massen- Anteil von 10 bis 50%, insbesondere von 20 bis 40%, umfasst.

7. Schallisolierungen gemäß einem der Ansprüche 5 oder 6, **dadurch gekennzeichnet, dass** die gegebenenfalls mikroperforierte Vliesschicht (2) ein Flächengewicht im Bereich von 40 bis 300 g/m², insbesondere im Bereich von 80 bis 250 g/m², aufweist.

8. Schallisolierungen gemäß einem der Ansprüche 5 bis 7, **dadurch gekennzeichnet, dass** sich auf der von der Schaumstoffschicht (1) abgewandten Seite der Sperrschicht (3) noch mindestens eine weitere textile oder nichttextile perforierte Schicht (4) aus Kunststoff, Gummi, Metall, Leder, Kunstleder, Holz, Kork oder Pappe befindet.

9. Schallisolierungen gemäß einem der Ansprüche 1 bis 8, **dadurch gekennzeichnet, dass**
zwischen der Schaumstoffschicht (1) und der sich darauf befindenden vorgelagerten Schicht (2, 5)
und/oder
zwischen der vorgelagerten Schicht (2, 5) und der Sperrschicht (3, 6, 7) und/oder
zwischen der Sperrschicht (3, 6, 7) und der darauf aufliegend(en) Schicht(en) (4) und/oder
zwischen den die Sperrschicht (7) bildenden Vliesschichten
und/oder
zwischen den auf der Sperrschicht (3, 6, 7) liegenden Schichten (4) eine vollflächige oder partielle Massebelegung (8) aufgebracht ist.

10. Verfahren zur Herstellung von Schallisolierungen gemäß einem der Ansprüche 1 bis 9, **dadurch gekennzeichnet, dass** man die Schaumstoffschicht (1) durch Hinterschäumen der Sperrschicht (3, 6, 7) und der vorgelagerten Schicht (2, 5) in einem Schäumwerkzeug aufbringt, wobei der Schaumstoff zuerst auf die vorgelagerte Schicht (2, 5) aufgebracht wird.

11. Verfahren gemäß Anspruch 10, **dadurch gekennzeichnet, dass** man die der Schaumstoffschicht (1) abgewandten Seite der Sperrschicht (3, 6, 7) vor oder nach dem Hinterschäumen mittels Latex, thermoplastischer Dispersionen oder Polyolefinen, insbesondere PE, oder thermoformbarer Klebevlieskonstruktionen mit mindestens einer zusätzlichen Schicht (4) verbindet.

12. Verfahren gemäß einem der Ansprüche 10 oder 11, **dadurch gekennzeichnet, dass** man die Vliesschicht (2, 5) vor dem Hinterschäumen mittels BiCo- oder PP-Faser-Anteilen in den Vliesen, thermoplastischer Dispersionen oder Polyolefinen, insbesondere PE, oder Vernadeln mit der Sperrschicht (3, 6, 7) verbindet.

## Claims

1. Sound insulation materials consisting of a foam layer (1), a full-area or partial upstream layer (2, 5), and a non-woven barrier layer (3, 6, 7), **characterized in that** said upstream layer (2, 5) includes a non-woven layer that is optionally microperforated, a microperforated sheet, or a microperforated non-woven sheet (2, 5) having a thickness of from 65 to 180 µm, the layer (2, 5) being provided between said foam layer (1) and said non-woven barrier layer (3, 6, 7) with a weight per surface area of from 180 to 650 g/m².

2. Sound insulation materials according to claim 1, **characterized in that** said microperforated non-woven sheet (2, 5) has a thickness within a range of from 40 to 100 µm.

3. Sound insulation materials according to either of claims 1 or 2, **characterized in that** said foam layer (1) is a PUR foam layer having a density within a range of from 30 to 120 g/I, especially having a density within a range of from 45 to 85 g/l, or a latex foam layer.

4. Sound insulation materials according to any of claims 1 to 3, **characterized in that** said optionally microperforated non-woven layer or said microperforated non-woven sheet (2, 5) includes polyester fibers, especially of PET, polyamide fibers, especially of nylon 6 or nylon 66, polyolefin fibers, especially of PP or PE, acrylic fibers, natural fibers, especially raw cotton, hemp, flax, coconut, kenaf, jute and/or sisal fibers, or mixtures thereof, especially reprocessed cotton fibers with a synthetics fraction, or PET/PA non-wovens, or copolymers thereof.

5. Sound insulation materials for floor coverings in motor vehicles according to any of claims 1 to 4, **characterized in that** said barrier layer (3) is a non-woven layer with a weight per surface area within a range of from 220 to 550 g/m².

6. Sound insulation materials according to claim 5, **characterized in that** said barrier layer (3) includes polyester fibers, especially of PET, polyamide fibers, especially of nylon 6 or nylon 66, polyolefin fibers, especially of PP or PE, acrylic fibers, natural fibers, especially raw cotton, hemp, flax, coconut, kenaf, jute and/or sisal fibers, or mixtures thereof, especially reprocessed cotton fibers with a synthetics fraction, or PET/PA non-wovens, or copolymers thereof, especially bicomponent fibers, with a mass proportion of 10 to 50%, especially 20 to 40%.

7. Sound insulation materials according to either of claims 5 or 6, **characterized in that** said optionally microperforated non-woven layer (2) has a weight per surface area within a range of from 40 to 300 g/m², especially within a range of from 80 to 250 g/m².

8. Sound insulation materials according to any of claims 5 to 7, **characterized in that** at least one further textile or non-textile perforated layer (4) of plastic, rubber, metal, leather, artificial leather, wood, cork or cardboard is provided on the side of the barrier layer (3) facing away from the foam layer (1).

9. Sound insulation materials according to any of claims 1 to 8, **characterized in that** a full-area or partial heavy layer is applied
between said foam layer (1) and said upstream layer (2, 5) provided thereon; and/or
between said upstream layer (2, 5) and said barrier layer (3, 6, 7); and/or
between said barrier layer (3, 6, 7) and said layer(s) (4) overlying it; and/or
between the non-woven layers forming said barrier layer (7); and/or
between the layers (4) overlying said barrier layer (3, 6, 7).

10. A process for preparing sound insulation materials according to any of claims 1 to 9, **characterized in that** said foam layer (1) is applied by foam-backing said barrier layer (3, 6, 7) and said upstream layer (2, 5) in a foaming mold, wherein the foam is first applied to said upstream layer (2, 5).

11. The process according to claim 10, **characterized in that** the side of the barrier layer (3, 6, 7) facing away from the foam layer (1) is bonded with at least one additional layer (4) by means of latex, thermoplastic dispersions or polyolefins, especially PE, or thermoformable adhesive non-woven constructions, before or after said foam-backing.

12. The process according to either of claims 10 or 11, **characterized in that** said non-woven layer (2, 5) is bonded with said barrier layer (3, 6, 7) by means of bicomponent or PP fiber fractions in the non-wovens, thermoplastic dispersions or polyolefins, especially PE, or by needle-punching, before said foam-backing.

## Revendications

1. Matériaux d'isolation acoustique consistant en une couche de mousse (1), une couche en amont (2, 5) présente sur toute la surface ou en partie, et une couche barrière de non-tissé (3, 6, 7), **caractérisés en ce que** ladite couche en amont (2, 5) comprend une couche de non-tissé, éventuellement microperforée, une feuille microperforée, ou une feuille de non-tissé microperforée (2, 5) avec une épaisseur de 65 à 180 µm, ladite couche (2, 5) étant située entre la couche de mousse (1) et la couche barrière de non-tissé (3, 6, 7) avec un poids surfacique de 180 à 650 g/m².

2. Matériaux d'isolation acoustique selon la revendication 1, **caractérisés en ce que** ladite feuille de non-tissé microperforée (2, 5) a une épaisseur comprise entre 40 et 100 µm.

3. Matériaux d'isolation acoustique selon l'une des revendications 1 ou 2, **caractérisés en ce que** ladite couche de mousse (1) est une couche de mousse de polyuréthane avec une densité comprise entre 30 et 120 g/l, notamment avec une densité comprise entre 45 et 85 g/l, ou une couche de mousse de latex.

4. Matériaux d'isolation acoustique selon l'une quelconque des revendications 1 à 3, **caractérisés en ce que** ladite couche de non-tissé, éventuellement microperforée, ou ladite feuille de non-tissé microperforée (2, 5) comprend des fibres de polyester, notamment de PET, des fibres de polyamide, notamment de nylon 6 ou de nylon 66, des fibres de polyoléfines, notamment de PP ou PE, des fibres acryliques, des fibres naturelles, notamment des fibres de coton brut, de chanvre, de lin, de noix de coco, de kenaf, de jute et/ou de sisal, ou des mélanges de ceux-ci, notamment de coton effiloché avec une fraction de synthétiques, ou des non-tissés de PET/PA, ou des copolymères de ceux-ci.

5. Matériaux d'isolation acoustique pour des revêtements de sols pour véhicules à moteur selon l'une quelconque des revendications 1 à 4, **caractérisés en ce que** ladite couche barrière (3) est une couche de non-tissé avec un poids surfacique compris entre 220 et 550 g/m².

6. Matériaux d'isolation acoustique selon la revendication 5, **caractérisés en ce que** ladite couche barrière (3) comprend des fibres de polyester, notamment de PET, des fibres de polyamide, notamment de nylon 6 ou de nylon 66, des fibres de polyoléfines, notamment de PP ou PE, des fibres acryliques, des fibres naturelles, notamment des fibres de coton brut, de chanvre, de lin, de noix de coco, de kenaf, de jute et/ou de sisal, ou des mélanges de ceux-ci, notamment de coton effiloché avec une fraction de synthétiques, ou des non-tissés de PET/PA, ou des copolymères de ceux-ci, notamment des fibres bicomposantes avec un pourcentage massique de 10 à 50 %, notamment de 20 à 40 %.

7. Matériaux d'isolation acoustique selon l'une des revendications 5 ou 6, **caractérisés en ce que** ladite couche de non-tissé (2), éventuellement microperforée, présente un poids surfacique compris entre 40 et 300 g/m², notamment compris entre 80 et 250 g/m².

8. Matériaux d'isolation acoustique selon l'une quelconque des revendications 5 à 7, **caractérisés en ce qu'**au moins une autre couche perforée textile ou non textile (4) en plastique, caoutchouc, métal, cuir, cuir artificiel, bois, liège ou carton est située au côté de la couche barrière (3) opposé à la couche de mousse (1).

9. Matériaux d'isolation acoustique selon l'une quelconque des revendications 1 à 8, **caractérisés en ce qu'**une couche dense (8) présente sur toute la surface ou en partie est appliquée
entre ladite couche de mousse (1) et ladite couche en amont (2, 5) se trouvant dessus ; et/ou
entre ladite couche en amont (2, 5) et ladite couche barrière (3, 6, 7) ; et/ou
entre ladite couche barrière (3, 6, 7) et la couche/les couches (4) susjacentes ; et/ou
entre les couches de non-tissé constituant ladite couche barrière (7) ; et/ou
entre les couches (4) recouvrant ladite couche barrière (3, 6, 7).

10. Procédé pour la préparation de matériaux d'isolation acoustique selon l'une quelconque des revendications 1 à 9, **caractérisé en ce que** ladite couche de mousse (1) est appliquée par doublage en mousse de ladite couche barrière (3, 6, 7) et de ladite couche en amont (2, 5) dans un moule de moussage, dans lequel ladite mousse est appliquée d'abord à ladite couche en amont (2, 5).

11. Procédé selon la revendication 10, **caractérisé en ce que** le côté de la couche barrière (3, 6, 7) opposé à la couche de mousse (1) est relié avec au moins une couche additionnelle (4) au moyen de latex, de dispersions thermoplastiques ou de polyoléfines, notamment de PE, ou des constructions de non-tissé adhésif thermoformables, avant ou après le doublage en mousse.

12. Procédé selon l'une des revendications 10 ou 11, **caractérisé en ce que** ladite couche de non-tissé (2, 5) est reliée avec ladite couche barrière (3, 6, 7) au moyen de fractions de fibres bicomposantes ou de PP dans les non-tissés, de dispersions thermoplastiques ou de polyoléfines, notamment de PE, ou par aiguilletage, avant le doublage en mousse.
